**Europäisches Patentamt**

**European Patent Office**

**Office européen des brevets**

(19)

(11) Veröffentlichungsnummer : **0 150 496 B1**

(12)

# EUROPÄISCHE PATENTSCHRIFT

(45) Veröffentlichungstag der Patentschrift :
**19.08.87**

(51) Int. Cl.⁴ : **B 62 D 17/00**, B 25 B 21/00

(21) Anmeldenummer : **84116299.3**

(22) Anmeldetag : **24.12.84**

(54) **Kraftbetriebenes Einstellgerät zur Drehverstellung einer Gewindespindel, insbesondere einer Spurstange von Kraftfahrzeugen.**

(30) Priorität : 31.12.83 DE 3347697

(43) Veröffentlichungstag der Anmeldung :
**07.08.85 Patentblatt 85/32**

(45) Bekanntmachung des Hinweises auf die Patenterteilung : **19.08.87 Patentblatt 87/34**

(84) Benannte Vertragsstaaten :
**BE DE FR GB IT SE**

(56) Entgegenhaltungen :
**DE-A- 2 644 865**

(73) Patentinhaber : **Lauer, Gerhard**
**Grosswaldstrasse 6**
**D-6686 Eppelborn (DE)**

**Morawietz, Alfred**
**Zollstockstrasse 12**
**D-6610 Lebach (DE)**

**Wild, Jürgen**
**Am Stehlsberg 4**
**D-6601 Riegelsberg (DE)**

(72) Erfinder : **Lauer, Gerhard**
**Grosswaldstrasse 6**
**D-6686 Eppelborn (DE)**
Erfinder : **Morawietz, Alfred**
**Zollstockstrasse 12**
**D-6610 Lebach (DE)**
Erfinder : **Wild, Jürgen**
**Am Stehlsberg 4**
**D-6601 Riegelsberg (DE)**

(74) Vertreter : **Bernhardt, Winfrid, Dr.-Ing.**
**Kobenhüttenweg 43**
**D-6600 Saarbrücken (DE)**

## Beschreibung

Die Erfindung betrifft ein kraftbetriebenes Einstellgerät zur Drehverstellung einer Gewindespindel, insbesondere einer Spurstange zur Einstellung der Vorspur von lenkbaren Kraftfahrzeugrädern nach dem Oberbegriff des Patentanspruches 1 und geht damit aus von der DE-A-2 644 865. Der in dieser Literaturstelle beschriebene tragbare, kraftbetriebene Rohrschlüssel mit Druckwalzen- bzw. Reibradantrieb für die Spurstange an Kraftfahrzeugen soll gemäß der Erfindung dahingehend weiterentwickelt werden, daß auch das Lösen und Festziehen einer auf der Gewindespindel bezw. Spurstange sitzenden Kontermutter, durch die die Drehlage der Gewindespindel gesichert wird, durch Kraft-Antrieb bewältigt werden kann.

Die Lösung dieser Aufgabe ist im Patentanspruch 1 angegeben. Hiernach ist das Einstellgerät gemäß der Erfindung mit einer reversierend drehbaren steckschlüsselartigen Nuss versehen, die durch Axialverstellung mit der Kontermutter in formschlüssigen Eingriff gebracht werden kann, wenn sich die Gewindespindel innerhalb der bekannten Druckwalzen-Anordnung in Verstellposition befindet. Indem sowohl die Druckwalzen-Anordnung als auch die steckschlüssel-lähnliche Nuss mit getrennten Antrieben und Getrieben innerhalb eines gemeinsamen Gehäuses versehen sind, wird durch die Erfindung ein platzsparendes und für einen automatischen Ablauf aller Einstellvorgänge geeignetes Einstellgerät geschaffen, das insbesondere für die Werkstattmontage von Kraftfahrzeugen konzipiert ist. Das Gerät kann in entsprechender Anpassung überall dort verwendet werden, wo es darum geht, die Wirklänge von Gestängeteilen, die aus einer durch eine Kontermutter gesicherten Gewindespindel bestehen, einzustellen.

Zweckmässige Weiterbildungen des Einstellgerätes gemäß der Erfindung sind in den Patentansprüchen 2 bis 6 angegeben.

In der Zeichnung ist ein Ausführungsbeispiel der Erfindung dargestellt, und zwar zeigt :

Figur 1 eine Seitenansicht des aufgeschnittenen gemeinsamen Gehäuses entlang der Linie I-I in Fig. 2,

Figur 2 einen senkrechten Schnitt entlang der Linie II-II in Fig. 1, Zahnräder und Wellen nicht geschnitten,

Figur 3 eine Seitenansicht ähnlich Fig. 1, jedoch in Richtung des Pfeiles III in Fig. 2, und

Figur 4 einen senkrechten Schnitt entlang der Linie IV-IV in Fig. 3, Zahnräder und Wellen nicht geschnitten.

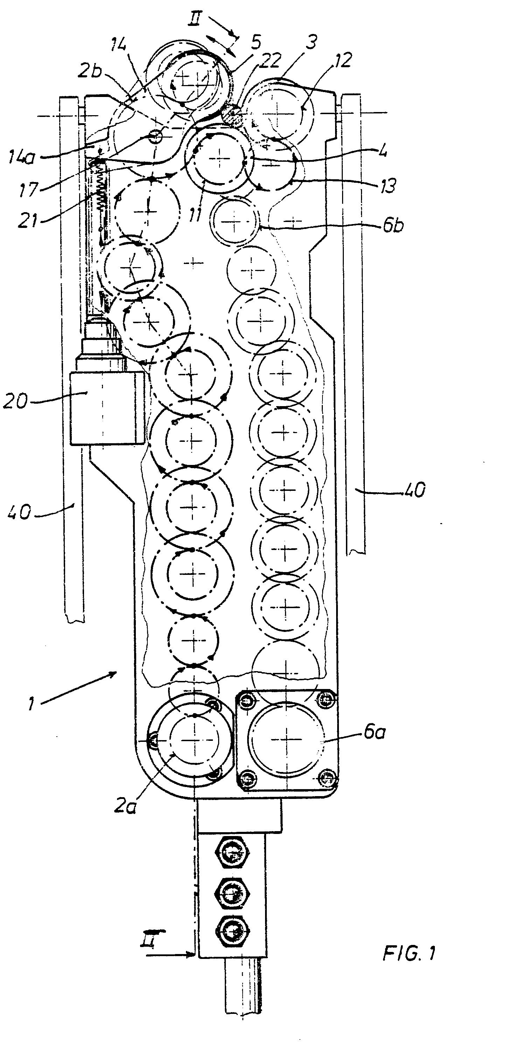

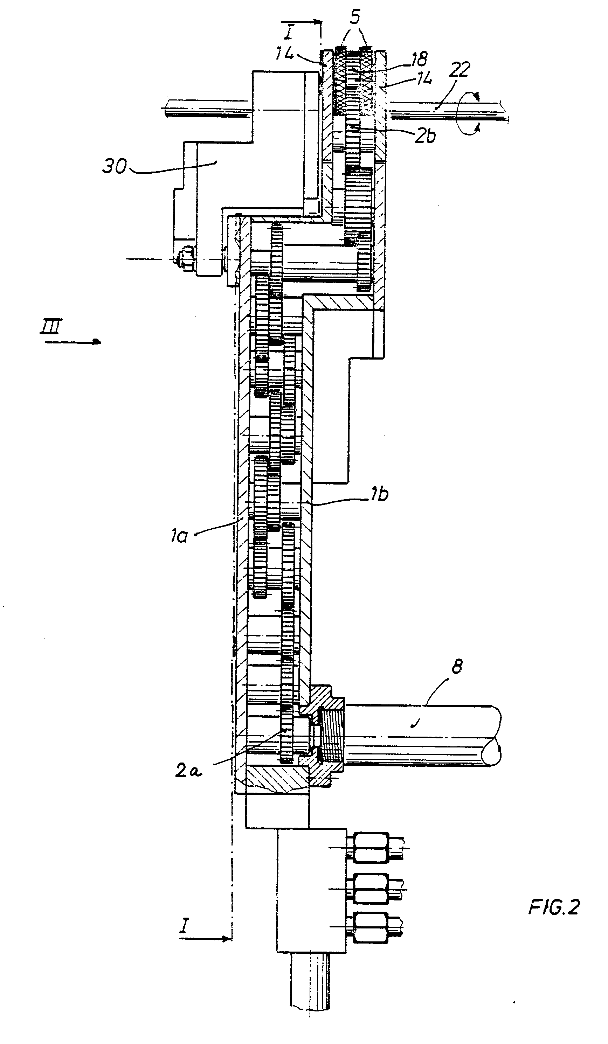

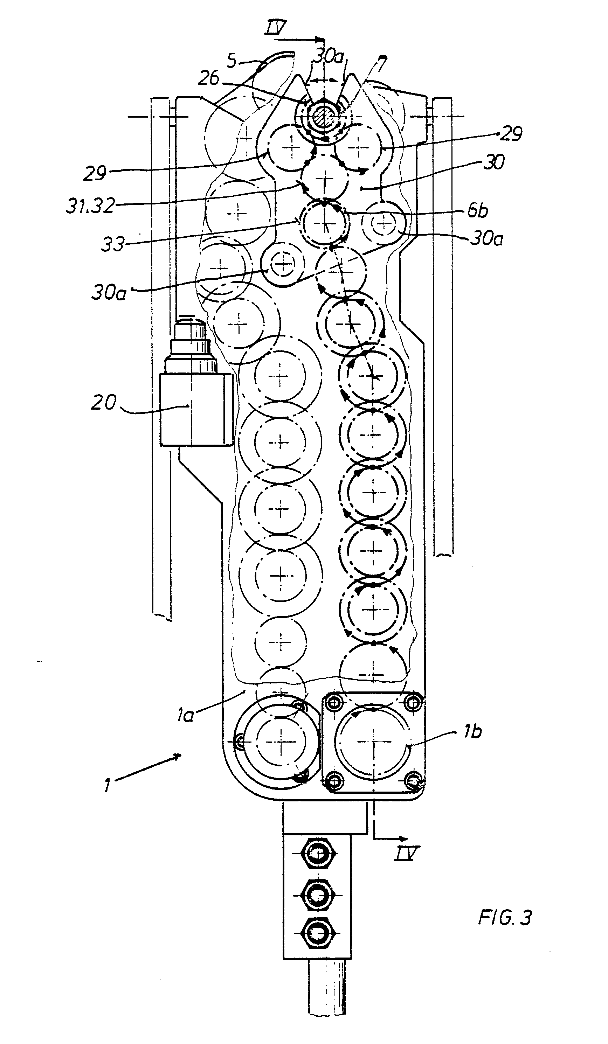

Hauptbestandteil des dargestellten Einstellgerätes ist ein längliches abgestuftes Gehäuse 1 mit der Vorderwand 1a und der Rückwand 1b, in denen die Wellen von zwei Gruppen von Zahnrädern gelagert sind. In Fig. 1 und 3 ist die Vorderwand 1a aufgeschnitten zur Darstellung eines ersten Getriebes mit dem unteren Eingangsrad 2a und dem oberen letzten Rad 2b (Fig. 2), von dem der Antrieb für drei Druckwalzen 3, 4 und 5 abgeleitet ist, wie noch näher erläutert wird. Fig. 1 und 3 zeigen ferner ein zweites Getriebe mit dem unteren Eingangsrad 6a und dem oberen letzten Rad 6b, von dem der Antrieb für eine steckschlüsselähnliche Nuss 7 abgeleitet ist. Beide Getriebe sind unabhängig voneinander angetrieben, und zwar das erste Getriebe 2a bis 2b über einen Druckluftmotor 8 (Fig. 2) und das zweite Getriebe 6a bis 6b über einen Druckluftmotor 9.

Das in Fig. 1 hervorgehobene und in Fig. 2 in Ansicht dargestellte erste Getriebe 2a bis 2b dient wie gesagt zum gleichsinnigen Antrieb der drei Druckwalzen 3, 4 und 5, die auf den Scheitelpunkten eines Dreiecks liegen. Die Druckwalzen 3 und 4 sind fest gelagert und erhalten ihren Drehantrieb von dem letzten Zahnrad 2b über mit ihnen kämmende Zahnräder 11 und 12 sowie ein Zwischenrad 13. Die Druckwalze 5 hingegen ist mittels eines motorisch verstellbaren Schwenkhebels 14 beweglich, dessen geometrische Schwenkachse 17 zugleich die Achse des Zahnrades 2b ist. Die Druckwalze 5 ist mit einem gleichachsigen Zahnrad 18 verbunden (Fig. 2), das mit dem Zahnrad 2b im Eingriff steht. An einem zweiten Arm 14a des Schwenkhebels 14 greifen ein hydraulischer Stellmotor 20 sowie eine Rückholfeder 21 an.

Die an sich bekannte Druckwalzen-Anordnung 3, 4 und 5 dient zur Drehverstellung einer Gewindespindel, im Ausführungsbeispiel einer Spurstange 22, die in die in Fig. 1 dargestellte Verstellposition durch eine relative Querbewegung gelangt, wenn die Druckwalze 5 in der strichpunktiert dargestellten abgeschwenkten Öffnungs-Lage ist. In der voll ausgezogen dargestellten beigeschwenkten Schließlage erzeugt die Druckwalze 5 den Anpreßdruck der drei Druckwalzen zum Drehen der Spurstange 22 durch Reibkraft. Das hierbei von den Druckwalzen ausgeübte Drehmoment wird von dem Gehäuse 1 abgestützt.

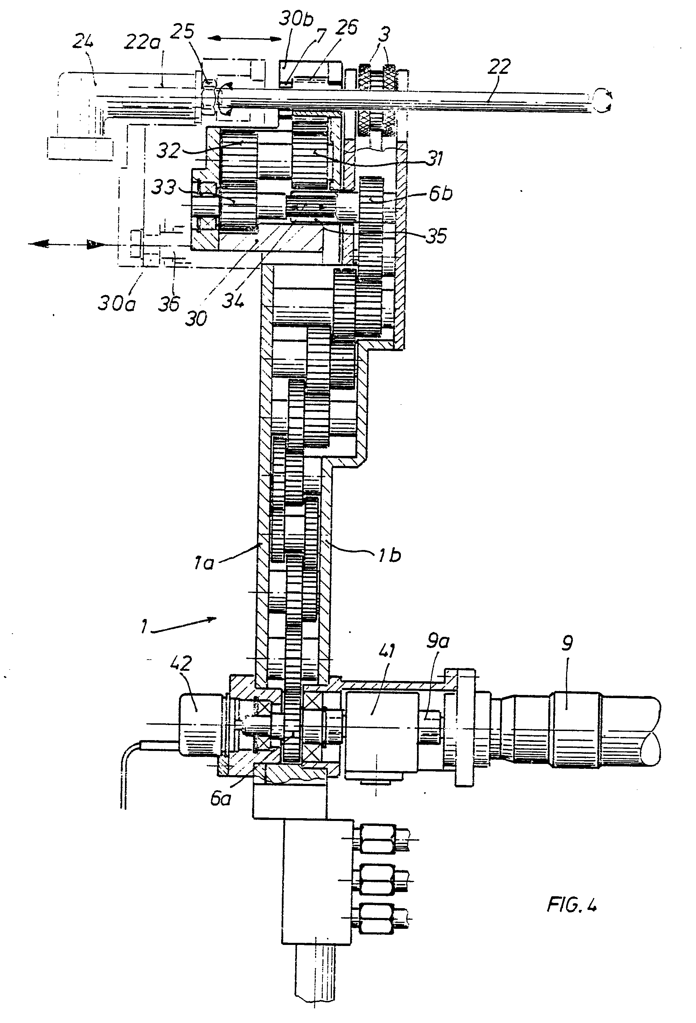

Zum besseren Verständnis von Fig. 3 und 4 sei vorausgeschickt, daß in Fig. 4 die zu verstellende Spurstange 22 mit ihrem Verstellgewinde 22a in einen Spurstangenkopf 24 eingeschraubt und durch eine sechskantige Kontermutter 25 gesichert ist, die das Gewinde 22a verspannt. Zum kraftbetätigten Lösen dieser Kontermutter vor einer Drehverstellung der Spurstange 22 sowie zum Festdrehen der Kontermutter 25 nach der Drehverstellung bezw. Spur-Einstellung ist von dem letzten Zahnrad 6b des zweiten Getriebes 6a bis 6b ein Antrieb für die bereits erwähnte steckschlüsselartige Nuss 7 abgeleitet, die eine sechskantige Aufnahme mit der Schlüsselweite der Kontermutter 25 hat und die in der Fluchtlinie der Verstellposition der Spurstange 22 angeordnet ist. Die anhand von Fig. 1 erläuterte Verstellposition der Spurstange 22 ist durch deren Durchmesser sowie die Lage der nicht verstellbaren Druckwalzen 3 und 4 bestimmt.

Die steckschlüsselartige Nuss 7 wird durch Axialverstellung mit der Kontermutter 25 in formschlüssigen Eingriff gebracht wobei es denkbar ist, daß diese Axialverstellung durch Bewegen des gesamten Einstellgerätes nach links in Fig. 4 ausgeführt wird. Bevorzugt wird eine andere Lösung, wie noch erläutert wird. Es ist zunächst festzustellen, daß wegen der erforderlichen relativen Querbewegung der Spurstange 22 bis zu deren Eintritt in die Verstellposition zwischen den drei Druckwalzen 3, 4 und 5 nach Fig. 1 sowohl die Nuss 7 als auch eine von der Nuss getragene Verzahnung 26 derart radial offen ausgebildet sind, daß die Spurstange 22 bei deren relativen Querbewegung zur Einstellung der Verstellposition in die steckschlüsselartige Nuss 7 sowie deren Verzahnung 26 einzutreten vermag, wenn — wie in Fig. 3 dargestellt — die radiale Öffnung bei entsprechender Drehlage der Nuss 7 nach oben gerichtet ist.

Die bereits erwähnte axiale Verstellung der Nuss 7 zum Erfassen der Kontermutter 25 ist im Ausführungsbeispiel motorisch gesteuert, indem die Nuss 7 in einem parallel zu den Achsen der Druckwalzen 3 bis 5 gegenüber dem gemeinsamen Gehäuse 1 verstellbaren Getriebeteil 30 gelagert ist, das auch in Fig. 2 erkennbar ist. Die durch die radiale Öffnung unterbrochene Verzahnung 26 der Nuss 7 steht über Zwischenräder 31, 32 mit einem Eingangs-Zahnrad 33 des verstellbaren Getriebeteils 30 in drehbarer Verbindung, das über eine eine axiale Verstellung zulassende drehfeste Verbindung von dem letzten Zahnrad 6b des zweiten Getriebes 6a bis 6b angetrieben ist. Diese drehfeste Verbindung besteht im Ausführungsbeispiel darin, daß die Welle des Zahnrades 33 als Keilwelle 34 ausgebildet ist, die in eine mit dem Zahnrad 6b verbundene, innenverzahnte Hülse 35 axial verschieblich eingreift (sogenannte Vielnutverzahnung). Wie nur aus Fig. 3 ersichtlich ist, kämmt die Verzahnung 26 der Nuss 7 mit zwei umfangsverteilten Zahnrädern 29, die ihrerseits mit dem Zwischenrad 31 (Fig. 4) kämmen. Diese umfangsverteilten Räder 29 stellen sicher, daß die Verzahnung 26 unabhängig von der Drehlage ihrer radialen Öffnung stets mit mindestens einem der Räder 29 im Eingriff ist.

In Fig. 3 erkennt man die Kontur des verstellbaren Getriebeteils 30 in der Draufsicht auf eine Seitenwand, die zu zwei Augen 30a ausgebildet ist, an die zwei Kolbenstangen 36 von druckmittelbetriebenen Verstellzylindern (nicht dargestellt) befestigt sind, sodaß das verstellbare Getriebe über die Kolbenstangen geführt ist. Ein Auge 30a und eine Kolbenstange 36 sind in Fig. 4 für die strichpunktiert dargestellte, nach links verstellte Lage des Getriebeteils 30 angedeutet. Wie die Kontur des verstellbaren Getriebeteils 30 nach Fig. 3 ferner zeigt, ist das Gehäuse des Getriebeteils mit in Richtung der relativen Querbewegung der Spurstange 22 konvergierenden Auflaufkanten 30b versehen.

Das Einstellgerät ist zur Werkstattmontage an heb- und senkbaren Führungsstangen 40 gehaltert, und zwar pendelnd um eine Querachse, die zur Spurstange 22 senkrecht verläuft, sodaß sich das Gerät je nach Schräglage der Spurstange selbst ausrichten kann. Die Druckwalzen 3 bis 5 und die Nuss 7 sind bei einem Werkstattgerät zweckmässig am oberen offen Ende des Gehäuses 1 angeordnet. Empfehlenswert ist es ferner, an die Antriebswelle 9a des Druckluftmotors 9 zum Drehen der Nuss 7 einen Drehmomenten-Meßwertgeber 41 und einen Drehstellungs-Meßwertgeber 42 anzuschließen.

Die Wirkungsweise des beschriebenen Einstellgerätes ist folgende :

Bei abgeschwenkter Öffnungs-Lage der Druckwalze 5 wird das gemeinsame Gehäuse 1 mittels der Führungsstangen 40 hochgesteuert, bis die Spurstange 22 mit freiliegenden Umfangsteilen der Druckwalzen 3 und 4 in Berührung gelangt. Bei dieser relativen Querbewegung der Spurstange 22 findet diese aufgrund der konvergierenden Auflaufkanten 30b des verstellbaren Getriebeteils 30 auch in die radiale Öffnung der steckschlüsselartigen Nuss 7 und ihrer Verzahnung 26, wie Fig. 3 zeigt. Die aufnahmegerechte Drehstellung dieser radialen Öffnung ist über den Drehstellungs-Meßwertgeber 42 oder einen Endschalter voreingestellt. Nunmehr wird der hydraulische Stellmotor 20 betätigt und die Druckwalze 5 an die Spurstange 22 angedrückt. Sodann wird das verstellbare Getriebeteil 30 mittels der Kolbenstangen 36 mit der Nuss 7 in Pfeilrichtung nach links verstellt, bis die Kontermutter 25, gegebenenfalls unter leichter Drehung der Nuss 7, in deren Innensechskant einrastet. Da die Lage der Kontermutter 25 bei der Werkstattmontage nicht definiert ist, wird sie durch Betätigen des Motors 9 erst einmal in eine leichte Anschlaglage an den Spurstangenkopf 24 herangedreht. Daraufhin wird der Druckluftmotor 9 im Sinne des Losdrehens der Kontermutter 25 um einige Umdrehungen eingeschaltet. Die Spurstange 22 wird dabei von den feststehenden Druckwalzen 3 bis 5 und dem inneren Widerstand des ersten Getriebes festgehalten. Nach dem Lösen der Kontermutter 25 wird nun diese durch den inneren Widerstand des zweiten Getriebes von der Nuss 7 festgehalten, wenn die Druckwalzen zur Drehverstellung der Spurstange 22 in dem einen oder anderen Sinne betätigt werden. Ist die gewünschte Drehverstellung der Spurstange erreicht, werden wiederum die Druckwalzen stillgesetzt und die Nuss 7 im Sinne des Festziehens der Kontermutter 25 betätigt, bis der Drehmomenten-Meßwertgeber 41 den gewünschten Sollwert meldet. Die Drehverstellung der Nuss 7 wird von dem Drehstellungs-Meßwertgeber 42 überwacht.

Schließlich wird das verstellbare Getriebeteil 30 nach rechts zurückgestellt und die Nuss 7 unter Überwachung durch den Drehstellungs-Meßwertgeber 42 oder einen Endschalter im Leerlauf soweit gedreht, bis die radiale Öffnung der Nuss und ihrer Verzahnung 26 in der nach oben gerichteten voreingestellten aufnahmegerechten Drehlage ist, um das Einstellgerät mittels der Führungsstangen 40 bei geöffneter Druckwalzen-Anordnung wieder absenken zu können.

**Patentansprüche**

1. Einstellgerät zur Drehverstellung einer Gewindespindel, insbesondere einer Spurstange (22) eines Kraftfahrzeugs, mit drei zusammenwirkenden Druckwalzen (3, 4, 5), von denen mindestens zwei Druckwalzen angetrieben sind und von denen eine Druckwalze (5) beweglich ist, um in einer Öffnungs-Lage die Gewindespindel durch relative Querbewegung in die durch Anlage an den übrigen Druckwalzen bestimmte Verstellposition gelangen zu lassen und in Schließlage den Anpreßdruck der drei Druckwalzen zum Drehen der Gewindespindel durch Reibkraft zu erzeugen, und mit einem Gehäuse (1) zur Aufnahme eines Getriebes zum Antrieb der Druckwalzen, über das das von den Druckwalzen ausgeübte Drehmoment abgestützt ist, dadurch gekennzeichnet, daß ein zweites Getriebe (6a bis 6b) zum reversierenden Antrieb einer in der Fluchtlinie der Verstellposition der Gewindespindel (22) angeordneten steckschlüsselartigen Nuß (7) vorgesehen ist, die eine Schlüsselweite hat, die der Schlüsselweite einer auf der Gewindespindel angeordneten Kontermutter (25) entspricht, daß die Nuß durch Axialverstellung mit der Kontermutter in formschlüssigen Eingriff bringbar ist, daß sowohl die Nuß als auch eine von der Nuß getragene Verzahnung (26) derart radial offen ausgebildet sind, daß die Gewindespindel bei deren relativer Querbewegung bis zur Verstellposition in die steckschlüsselartige Nuß sowie deren Verzahnung einzutreten vermag, und daß die Verzahnung (26) mit zwei Antriebs-Zahnrädern (29) kämmt, von denen unabhängig von der Drehlage der radialen Öffnung stets mindestens eines mit der Verzahnung im Eingriff ist.

2. Einstellgerät nach Anspruch 1, dadurch gekennzeichnet, daß die steckschlüsselartige Nuss (7) in einem parallel zu den Achsen der Druckwalzen (3 bis 5) gegenüber dem gemeinsamen Gehäuse (1) motorisch verstellbaren Getriebeteil (30) gelagert ist und die Verzahnung (26) der Nuss über das umfangsverteilte Zahnradpaar (29) und Zwischenräder (31, 32) mit einem Eingangs-Zahnrad (33) des verstellbaren Getriebeteils in drehbarer Verbindung ist, das über eine eine axiale Verstellung zulassende drehfeste Verbindung (34, 35) von dem letzten Zahnrad (6b) des zweiten Getriebes (6a bis 6b) angetrieben ist.

3. Einstellgerät nach Anspruch 2, dadurch gekennzeichnet, daß das verstellbare Getriebeteil (30) über zwei Kolbenstangen (36) von druckmittelbetriebenen Verstellzylindern geführt ist.

4. Einstellgerät nach Anspruch 2, dadurch gekennzeichnet, daß das Gehäuse des verstellbaren Getriebeteils (30) mit in Richtung der relativen Querbewegung der Gewindespindel (22) konvergierenden Auflaufkanten (30b) versehen ist.

5. Einstellgerät nach einem oder mehreren der vorhergehenden Ansprüche, dadurch gekennzeichnet, daß das Einstellgerät zur Werkstattmontage in einer zur Gewindespindel senkrecht verlaufenden Achse pendeln an heb- und senkbaren Führungsstangen (40) gehaltert ist und daß die Druckwalzen (3 bis 5) und die Nuss (7) an dem oberen offenen Ende des Gehäuses (1) angeordnet sind.

6. Einstellgerät nach Anspruch 5, dadurch gekennzeichnet, daß der Antrieb für das zweite Getriebe (6a bis 6b) zum Drehen der Nuss (7) über einen Druckluftmotor (9) erfolgt, an dessen Antriebswelle (9a) ein Drehmomenten-Meßwertgeber (41 und ein Drehstellungs-Meßwertgeber (42) angeschlossen sind.

**Claims**

1. Adjustment device for the rotary adjustment of a threaded spindle, in particular of a track rod (22) of a motor vehicle, having three interacting pressure rollers (3, 4, 5), of which at least two pressure rollers are driven and of which one pressure roller (5) is moveable, so as in an open position to allow the threaded spindle to reach the adjustment position determined by abutting onto the remaining pressure rollers by a relative transverse movement and in the closing position so as to produce the bearing pressure of the three pressure rollers to rotate the threaded spindle by frictional force, and having a housing (1) for receiving gearing to drive the pressure rollers, the torque exerted by the pressure rollers being supported by the housing, characterised in that a second gear (6a to 6b) is provided for the reverse drive of a socket wrench-like nut (7) disposed in the straight line of the adjustment position of the threaded spindle(22), said nut has a key width corresponding to the key width of a counter nut (25) disposed on the threaded spindle, in that the nut can be brought into form-locking engagement with the counter nut by axial displacement, in that both the nut and also cogging (26) borne by the nut are constructed radially open so that the threaded spoindle is capable of entering the socket wrench-like nut and its cogging during its relative transverse movement right up to the adjustment position, and in that the cogging (26) meshes with two drive gears (29), of which at least one is constantly in engagement with the cogging irrespective of the rotary position of the radial aperture.

2. Adjustment device according to Claim 1, characterised in that the socket wrench-like nut (7) is mounted in a gearing part (30) which can be displaced by motor in relation to the common housing (1) parallel to the axes of the pressure rollers (3 to 5) and the cogging (26) of the nut is pivoted to an input cogwheel (33) of the adjustable gearing part via the cogwheel pair (29) distributed over the periphery and intermediate wheels (31, 32), the said input cogwheel is driven by the last cogwheel (6b) of the second gear (6a to 6b) via a torsionally strong connection (34, 35) permitting an axial displacement.

3. Adjustment device according to Claim 2, characterised in that the adjustable gear part (30) is guided by pitch operating cylinders operated by pressure medium via two piston rods (36).

4. Adjustment device according to Claim 2, characterised in that the housing of the adjustable gear part (30) is provided with leading edges (30b) converging in that direction of the relative transverse movement of the threaded spindle (22).

5. Adjustment device according to one or more of the preceding Claims, characterised in that for the purpose of workshop assembly the adjustment device is held in raisable and lowerable guide bars (40) swinging in an axis perpendicular to the threaded spindle and in that the pressure rollers (3 to 5) and the nut (7) are disposed at the upper open end of the housing (1).

6. Adjustment device according to Claim 5, characterised in that the drive for the second gear (6a to 6b) to rotate the nut (7) is effected via a compressed air motor (9), to the drive shaft (9a) of which a torque pick-up (41) and a rotary position pick-up (42) are connected.

## Revendications

1. Dispositif de réglage pour le réglage de la rotation d'une broche filetée, en particulier d'une barre d'accouplement (22) des roues d'un véhicule automobile, comportant trois cylindres de pression (3, 4, 5) qui coopèrent et dont deux au moins sont entraînés tandis que l'un d'eux (5) est mobile, de manière que, dans une position d'ouverture, la broche filetée puisse, par un déplacement transversal relatif, être placée dans la position de réglage déterminée par le contact avec les autres cylindres de pression et que, dans une position de fermeture, les trois cylindres exercent une pression produisant par frottement la rotation de la broche filetée, et une enveloppe (1) qui contient un engrenage assurant l'entraînement des cylindres de pression et sur laquelle le moment de rotation exercé par les cylindres de pression trouve son appui, caractérisé en ce qu'il comprend un deuxième engrenage (6a à 6b) pour l'entraînement inverse d'une noix (7) du type clé à canon placée dans le prolongement de la position de déplacement de la broche filetée (22) et dont la largeur de clé correspond à la largeur de clé d'un contre-écrou (25) monté sur la broche filetée, en ce que la noix peut, par un déplacement axial, s'engager par encastrement dans le contre-écrou, en ce que la noix et l'endentement (26) porté par la noix sont ouverts dans le sens radial vers l'extérieur de telle manière que la broche filetée peut, pendant son déplacement transversal relatif jusqu'à sa position de déplacement, pénétrer dans la noix du type à clé à canon et dans son endentement et en ce que l'endentement (26) engrène dans deux bords d'entraînement dentés (29) dont l'un au moins est toujours en prise avec l'endentement, quelle que soit la position de rotation de l'ouverture dans le sens radial.

2. Dispositif de réglage selon la revendication 1, caractérisé en ce que la noix (7) du type à clé à canon est montée sur palier dans une partie d'engrenage (30) qui peut se déplacer sous l'action d'un moteur parallèlement aux axes des cylindres de pression (3 à 5) par rapport à l'enveloppe commune (1) et que l'endenture (26) de la noix est reliée pour la rotation, par l'intermédiaire de la paire de roues dentées (29) réparties à la périphérie et de roues intermédiaires (31, 32), à une roue dentée d'entrée (33) de la partie d'engrenage mobile qui est entraînée, par l'intermédiaire d'un dispositif de liaison (34, 35) ne permettant pas une rotation relative, mais permettant un déplacement axial, par la dernière roue dentée (6b) du deuxième engrenage (6a à 6b).

3. Dispositif de réglage selon la revendication 2, caractérisé en ce que la partie d'engrenage (30) qui peut être déplacée est guidée, par l'intermédiaire de deux tiges de piston (38), par des cylindres de déplacement commandés par un milieu de pression.

4. Dispositif de réglage selon la revendication 2, caractérisé en ce que l'enveloppe de la partie d'engrenage (30) qui peut être déplacée comporte des bords d'accès (30b) qui sont convergents dans la direction du déplacement transversal relatif de la broche filetée (22).

5. Dispositif de réglage selon l'une ou plusieurs des revendications 1 à 4, caractérisé en ce que, pour le montage en atelier, il est maintenu, sur des tiges de guidage (40) qui peuvent s'élever et s'abaisser, de manière à osciller sur un axe orienté perpendiculairement à la broche filetée et en ce que les cylindres de pression (3 à 5) et la noix (7) sont placés à l'extrémité ouverte supérieure de l'enveloppe (1).

6. Dispositif de réglage selon la revendication 5, caractérisé en ce que l'entraînement du deuxième engrenage (6a à 6b) pour la rotation de la noix (7) s'effectue par l'intermédiaire d'un moteur à air comprimé (9) à l'arbre de commande (9a) duquel sont reliés un indicateur (41) de mesure des moments de rotation et un indicateur (43) de mesure des positions de rotation.

FIG. 1

0 150 496

FIG.2

FIG. 3

FIG. 4